(19) Europäisches Patentamt
European Patent Office
Office européen des brevets

(11) EP 0 604 833 B1

(12) **EUROPEAN PATENT SPECIFICATION**

(45) Date of publication and mention
of the grant of the patent:
**23.07.1997 Bulletin 1997/30**

(51) Int Cl.6: **C08L 9/00**, C08L 51/04,
C08K 3/06, B60C 1/00

(21) Application number: **93120225.3**

(22) Date of filing: **15.12.1993**

(54) **High modulus low hysteresis rubber compound for pneumatic tires**

Kautschukmischung für Reifen mit hohem Elastizitätsmodul und geringer Hysterese

Composition de caoutchouc pour pneumatique à module d'élasticité élevé et à basse hystérésis

(84) Designated Contracting States:
**DE ES FR GB IT**

(30) Priority: **30.12.1992 US 998301**

(43) Date of publication of application:
**06.07.1994 Bulletin 1994/27**

(73) Proprietor: **BRIDGESTONE CORPORATION
Tokyo 104 (JP)**

(72) Inventors:
• **Freeman, Roy M.
Akron, Ohio 44319 (US)**

• **Hergenrother, William L.
Akron, Ohio 44313 (US)**
• **Ravagnani, Fredrick J.
Uniontown, Ohio 44685 (US)**

(74) Representative: **Kraus, Walter, Dr. et al
Patentanwälte Kraus, Weisert & Partner
Thomas-Wimmer-Ring 15
80539 München (DE)**

(56) References cited:
**EP-A- 0 509 295          EP-A- 0 514 910
DE-A- 3 737 595**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

This invention relates to novel vulcanizable rubber compounds having high modulus and low hysteresis. Such compounds can be utilized in various components of pneumatic tires and particularly in pneumatic safety tires which have a wall stiffness such that when the tire is punctured during running, it can bear the load of the vehicle to allow for continued high speeds for a relatively long distance until the proper repair or tire replacement can be made. More particularly, compounds of the present invention can be employed in components of safety tires having a high profile with a section height of at least 12.7 cm (5 inches). One such tire component is a sidewall insert. While the compounds of the present invention may comprise ingredients that are currently commercially available, the particular combination and proportions in which they are used was not previously known.

Various tire constructions have been devised over the years which enable a tire to run in an underinflated or non-inflated condition, such as after receiving a puncture and loss of air, for extended periods of time and at relatively high speeds, to enable the vehicle operator to safely drive the vehicle to an appropriate location for repair or replacement of the punctured tire. Certain of these safety tires, referred to as "run flat tires", have been successful for certain applications and embody various types of tire constructions. Many such run flat tires achieve their run flat property by the placement of reinforcing layers or members of relatively stiff elastomeric material in the sidewall areas of the tire where they enable the tire to support the vehicle weight even with the complete loss of internal air pressure.

Examples of various prior art run flat tire constructions are set forth in the following patents:

U.S. Pat. No. 3,911,987 discloses a low profile motorcycle tire which has an elastomeric internal reinforcement that enables the tire to stay inflated for a short duration with little or no air pressure. This reinforcing layer has a Shore A hardness of at least 45, preferably within the range of 60 to 90, and is positioned either outwardly of two tire body carcass plies or between the two carcass plies. This elastic reinforcement is constructed with varying thicknesses, and is cross-sectioned to eliminate abrupt changes of effective hardness of the sidewall and reinforcing layer.

U. S. Pat. No. 3,949,798 discloses another run flat tire construction for a low profile tire having reinforcing rubber insert strips located between the inner strips located between the inner liner and body ply carcass of the tire sidewall.

U.S. Pat. No. 3,954,131 discloses a safety tire which has elastomeric internal reinforcements in the sidewalls which permit the tire to be used for short durations with little or no air pressure within the tire. The elastomeric side reinforcements are of varying thicknesses and are positioned outwardly of the tire carcass.

U.S. Pat. No. 4,067,372 discloses a pneumatic radial tire having internal reinforcements in its sidewalls which are formed of hard rubber and are used in combination with the body carcass plies and tire bead rubber inserts to give additional stiffness to the supple portions of the tire. The body carcass plies are located outwardly of the rubber inserts and are made from several cord fabric radial plies, and extend completely to the bead area of the tire.

U.S. Pat. No.4,202,393 discloses a low profile motorcycle tire that has sidewall reinforcements to allow for a run flat condition in which the reinforcements are composed of an elastic filler with a reinforcing ply positioned completely around the elastic filler.

U.S. Pat. No. 4,203,481 discloses a run flat tire construction having reinforcing inserts made from a high modulus, low hysteresis rubber compound, which are located inwardly of the reinforcing carcass plies of the tire.

U.S. Pat. No. 4,261,405 shows another run flat tire construction for a low profile tire having a specially constructed rubber insert mounted between the inner liner and body ply carcass in the sidewall of the tire, in order to achieve the required rigidity for supporting the vehicle in an uninflated condition.

U.S. Pat. No. 4,287,924 discloses another run flat safety tire with sidewall reinforcing members. These members are comprised of two components, one of which is more flexible than the other, having a hardness rating greater than 70 and the other having a hardness rating of between 80 and 95. These reinforcing members are encased in the carcass plies of the tire and have a heat conducting layer positioned between the two components of the supporting members to alleviate heating problems in the thickest portions of the supporting members.

U.S. Pat. No. 4,365,659 discloses a run flat safety tire which has sidewall reinforcements made from low heat build up rubber which are positioned between an inner protective layer and the outer carcass plies of the tire.

U.S. Pat. No. 4,917,164 discloses the use of crescent-shaped reinforcing layers in the sidewalls of the tire to allow the tire to run for short durations with little or no air pressure. The reinforcing layers are of varying thickness and have a Shore A hardness of between 65 and 85, and are positioned between the innerliner and carcass plies of the tire. The wall thickness of the reinforcing members is between 1 and 12 millimeters.

Although many of these run flat tire constructions set forth in the above-referenced patents, have proven to be successful for certain applications, all these constructions pertain to low profile tires, that is a tire having a section height less than 12.7 cm (5 inches) and are of the type usually found on high performance vehicles (such as racing cars) or motorcycles, and rely almost entirely on the stiffness of the elastomeric insert to provide the support for the uninflated tire. Furthermore, these high performance and motorcycle tires carry relatively smaller loads when compared to the higher weights carried by the larger cars using the higher section height tires.

Heretofore, providing a run flat tire with a high profile tire construction, that is, a run flat tire having a section height of 12.7 cm (5 inches) or greater, has not proved successful due to the relatively large sidewall reinforcement members which would be required to adequately support the tire in an uninflated condition to enable the tire to run for a relatively long distance at a high rate of speed. The relatively large rubber inserts required would increase the weight of the tire to an unacceptable limit and would materially detract from its ride characteristic. If the amount of or type of material in these relatively large sidewall inserts were reduced or changed in order to lessen the weight of the tire and improve its ride characteristics, excessive heat would be generated within the inserts during a run flat operation, resulting in the rapid destruction of the tire, thus preventing the desired run flat conditions from being achieved at usual highway speeds for satisfactory use on such tires on most passenger vehicles.

Moreover, a vulcanizable rubber compound having sufficiently high modulus for use in tire components or structural elements so as to allow the resulting tire to have run flat characteristics is not described in the foregoing art. Thus, the need has existed for a rubber compound for use in components such as sidewall inserts for high profile pneumatic safety or run flat tires. This need has not been met by known rubber compounds.

## SUMMARY OF THE INVENTION

Thus, it is an object of the present invention to provide a vulcanizable rubber compound that possesses high modulus, low hysteresis and Shore A hardness within a specific high range.

It is another object to provide a vulcanizable rubber compound as above that can be employed to manufacture components or structural elements of pneumatic tires which exhibit run flat characteristics.

It is yet another object of the present invention to provide a vulcanizable rubber compound as above that can be employed to manufacture components of pneumatic tires having a section height of 12.7 cm (5 inches) or greater.

It is still another object of the present invention to provide a vulcanizable rubber compound that is useful to manufacture structural components of pneumatic tires including sidewall inserts, bead filler structures, high speed insert structures and the like.

It is yet another object of the present invention to provide a vulcanizable rubber compound having properties of high modulus, low hysteresis and sufficient stiffness to be useful in the construction of pneumatic tires and provide the necessary reinforcing effect required to enable the tire to support the vehicle in a run flat condition.

At least one or more of the foregoing objects, together with the advantages thereof over known rubber compounds and the use thereof in pneumatic tires which shall become apparent from the specification which follows, are accomplished by the invention as hereinafter described and claimed.

In general, the present invention pertains to a sulfur-vulcanizable rubber compound having high modulus, low hysteresis and high hardness when cured, said compound characterized by comprising from 25 to 55 parts by weight polyisoprene; from 75 to 45 parts by weight of a diene polymer selected from the group consisting of polybutadiene homopolymer and mixtures thereof with up to 25 percent by weight styrene-butadiene copolymer, to total 100 parts by weight of rubber,

wherein 60 to 80 percent by weight of said rubber is grafted with a metal salt of and $\alpha,\beta$-ethylenically unsaturated carboxylic acid;

from 50 to 70 parts by weight reinforcing filler, per 100 parts by weight of rubber and

at least 4 parts by weight sulfur per 100 parts by weight of rubber and, when cured, the rubber compound's mechanical modulus is 9.7 MPa to 13.3 MPa (1400 psi to 4000 psi) at 15% strain, its Tan Delta is from 0.03 to 0.20, measured at 100°C, 7% deflection and 10 Hz, and its Shore A hardness is from 80 to 97 at 23°C.

The present invention also provides a component or structural element for a pneumatic tire comprising the aforementioned rubber compound.

Finally, the present invention provides a pneumatic tire having run flat properties imparted to it by at least one structural component comprising the aforementioned rubber compound.

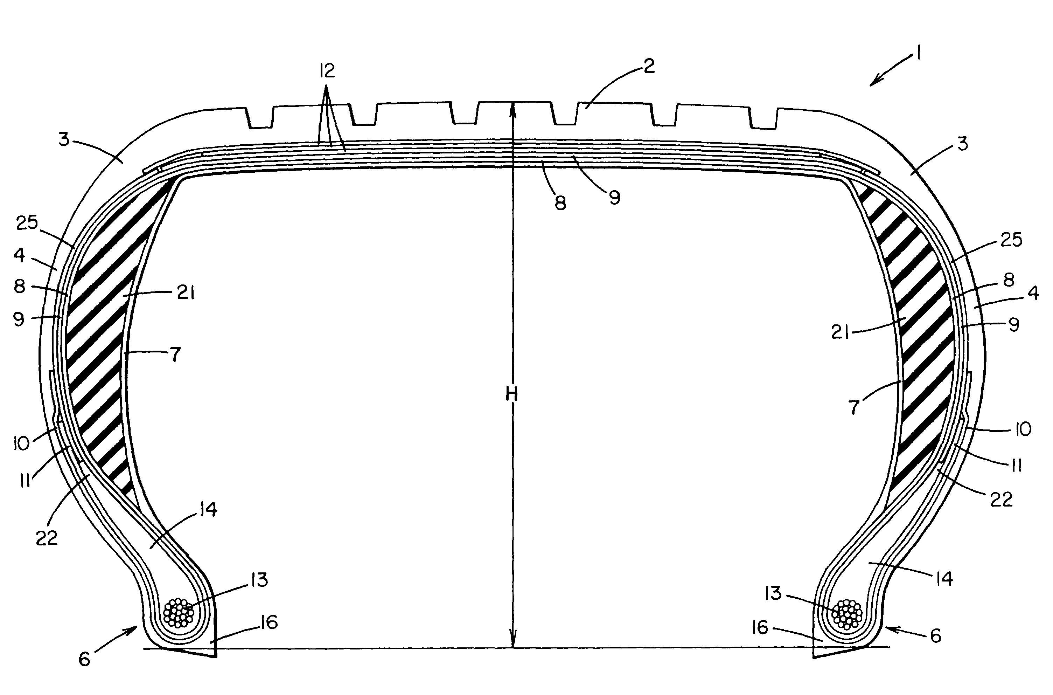

The drawing figure provides a cross-sectional view of a high profile tire whose construction is designed for run flat operation according to the invention.

As noted hereinabove the present invention is directed toward vulcanizable rubber compounds having high modulus, low hysteresis and a specific hardness range which are useful in the manufacture of high aspect ratio pneumatic tires, particularly safety tires possessing run flat characteristics. Physical properties that are necessary for the structural components of a run flat tire and that are possessed by the compounds of the present invention include stiffness, low heat build up and good resistance to heat. Stiffness, which is determined by high modulus and high hardness, is necessary to minimize sidewall displacement in run flat, or underinflated, conditions. Low heat build up is attributed to low hysteresis properties resulting in compounds which are cooler running and impart increased tire life under run flat

EP 0 604 833 B1

operating conditions. Finally, good heat resistance is also necessary to increase the life of the tire operating under run flat conditions. For good heat resistance it is necessary that the compound possess good aging and reversion resistance properties.

Rubber compounds, according to the present invention, comprise natural or synthetic polyisoprene, with natural polyisoprene being preferred, and elastomeric diene polymers including polybutadiene and styrene-butadiene copolymer. The rubber compounds provide the required low hysteresis and low heat build up properties, the polybutadiene rubber providing low hysteresis and low compression set, and the polyisoprene providing low hysteresis and high tensile strength. Suitable polybutadiene rubber is elastomeric and has a 1,2-vinyl content of 1 to 3 percent and a cis-1,4 content of 96 to 98 percent. Other high vinyl butadiene rubbers, having up to 12 percent 1,2-content, may also be suitable with appropriate adjustments in the level of other components, and thus, substantially any high vinyl, elastomeric polybutadiene can be employed. The diene polymer content of the rubber comound can comprise up to about 25 percent by weight of styrene-butadiene random copolymer, preferably 7 to 10 percent by weight.

The high modulus and high hardness properties can be attained by using certain metal salts of $\alpha$, $\beta$-ethylenically unsaturated carboxylic acids. The metal salts have the formula

$$(RCO_2)_x \, M$$

where R is an $\alpha,\beta$-ethylenically unsaturated acyclic moiety having 2 to 7 carbon atoms such as acrylic, methacrylic, cinnamic and crotonic acids of which acrylic and methacrylic acids are preferred; M is a metal ion selected from the group consisting of sodium, potassium, magnesium, calcium, zinc, barium, aluminum, tin, zirconium, lithium and cadmium of which zinc and magnesium are preferred; and x is an integer corresponding to the valence of M. A particularly preferred salt for this use is zinc dimethacrylate.

In the present invention, zinc dimethacrylate or other metal salt of an $\alpha$, $\beta$-ethylenically unsaturated carboxylic acid, is combined with at least one of the rubber polymers disclosed hereinabove in a grafting reaction such that the metal salt is incorporated into the polymeric backbone of the resultant grafted polymer. More specifically, zinc dimethacrylate is preferably grafted to the rubber polymers by reaction with free radicals.

The graft copolymer can be prepared by a relatively uncomplicated procedure. Thus, the graft copolymer can be prepared by first dissolving an unsaturated hydrocarbon rubber of the type described above such as polybutadiene in a solvent such as hexane, then adding a metal salt of an unsaturated carboxylic acid such as zinc dimethacrylate to the polymer solution, adding a free radical initiator such as azo-bis-isobutyronitrile to the polymer solution and then heating the reaction mixture at a temperature of from 40° to 150°C for a time period of from about 0.1 to 100 hours to form the graft copolymer.

Zinc dimethacrylate, when added to certain rubber compounds as a pigment, has been know to impart high modulus and high hardness properties. However, when the metal salt is added to the rubber polymers in the grafting reaction, superior properties such as flex fatigue are also imparted to the rubber compound as compared to those compounds wherein the zinc dimethacrylate has merely been added as a pigment.

The rubber compounds of the present invention comprise from 25 to 55 parts by weight of polyisoprene, and from 45 to 75 parts by weight of high vinyl diene polymer selected from the group consisting of polybutadiene homopolymer and mixtures thereof with up to 25 percent by weight styrene-butadiene copolymer rubber, to total 100 parts by weight of rubber (phr). A portion of at least one of these rubber polymers is present as the grafted polymer. In other words, the total rubber compound includes a portion of polyisoprene and polybutadiene which is not grafted and a portion which has become part of the grafted polymer. The grafted portion may be taken from either rubber polymer portion or from a portion of both.

The grafted rubber polymer, according to the present invention comprises 60 to 80 weight percent base (that is, substrate) polymer and 40 to 20 weight percent metal salt grafting agent, such as zinc dimethacrylate.

Additionally, the compounds of the present invention comprise from about 50 to 70 phr of carbon black as a low hysteresis filler material. Particularly useful is FEF (fast extrusion furnace) black, a relatively high structure and large particle size carbon black namely, 40 mm, 40 $m^2/g$, particle size and surface area, respectively. Further discussions of such carbon blacks can be found in the literature. See, for example, The Vanderbilt Rubber Handbook, pp 408-424, RT Vanderbilt Co., Norwalk, CT 06855 (1979) and Rubber Technology, 2d ed., pp 51-59, Van Nostrand Reinhold Corporation (1973).

The inventive compounds are cured by sulfur, rather than peroxides and thus, a sulfur curing agent, such as sulfur or a sulfur donor is required. Minimally, at least 4 phr of sulfur, or an equivalent amount of donor, is added to the compound to provide high modulus. In the present invention, addition of a sulfur in oil blend is generally preferred, with the mixture comprising 80 percent by weight of sulfur and 20 percent by weight of oil. The oils employed are conventional rubber processing oils. Conventional cure accelerators are also employed to provide fast modulus generation during cure. The inventive compounds also include from 1 to 3 phr of an antioxidant and an antiozonant of conventional types, (employed in the usual amounts) to impart good heat resistance to the compound .

Regarding physical properties of the rubber compounds of the present invention, a normalized, mechanical modulus of from 9.7 MPa to 13.3 MPa (1400 psi to 4000 psi) is suitable, the preferred range being between 17.9 MPa 17.9 MPa and 19.3 MPa (2600 psi and 2800 psi), with approximately 18.6 MPa (2700 psi) being most preferred. These moduli are at the run flat operating condition (0 MPa inflation) and are measured at 15% strain. The hardness range is within from 80 and 97 on the Shore A hardness scale, at 23°C, the preferred range being between 80 and 90, with 88 being most preferred. Likewise, the hysteresis when measured at 100°C at 10 Hz and 7% deflection, has a Tan Delta ($\delta$) of between 0.03 and 0.20, with the preferred range falling between 0.03 and 0.11 and most preferably, between 0.03 and 0.08.

As an example of a high modulus, low hysteresis, hard vulcanizable rubber compound according to the present invention a formulation has been provided in Table I, as Compound 1. The zinc methacrylate grafted polybutadiene is designated as $Zn(Ma)_2PBd$ in Table I. All non-rubber parts are presented on the basis of parts by weight per hundred rubber by weight (phr). To the right of compound 1, Table I lists a range of suitable amounts for each component. Notably, the ranges listed for polyisoprene and polybutadiene includes the polyisoprene and polybutadiene rubber employed by itself and as part of the grafted polymer. Thus, no range is shown for the zinc methacrylate grafted polymer.

The compounds of the present invention can contain conventional antioxidants, antiozonants and accelerators, as is shown for Compound 1. It is to be understood that such components are well known to those skilled in the art and thus, the present invention is not limited to the use of any particular antioxidants, antiozonants or accelerators, or amounts thereof. Similarly, practice of the present invention is also not limited to the specific formulation of Compound 1.

## TABLE I

### HIGH MODULUS, LOW HYSTERESIS,
### HARD VULCANIZABLE RUBBER COMPOUNDS

|  | COMPOUND 1 | RANGES |
|---|---|---|
| Natural rubber | 25.0 | 25-55 |
| $Zn(Ma)_2PBd$ | 52.0* | } 45-75 |
| Polybutadiene (ungrafted) | 40.0 | |
| FEF carbon black | 57.0 | 50-60 |
| Zinc oxide | 5.7 | 4-6 |
| Stearic acid | 1.14 | 1-2 |
| Naphthenic oil | 0.56 | 0.5-4 |
| Antioxidant[a] | 2.27 | 1-3 |
| Antiozonant[b] | 1.14 | 1-2 |
| Sulfur/oil (80/20) | 8.52 | 6-9 |
| Accelerator[c] | 1.70 | 1-2 |
| Accelerator[d] | 0.56 | 0-1 |
| Accelerator[e] | 0.56 | 0-1 |

\*     contains 35 phr polybutadiene and 17 phr zinc methacrylate

a)     1,2-dihydro-2,2,4-trimethylquinoline (TMQ)

b)     N-octyl, N'-phenyl-p-phenylene diamine

c)     2-(morpholinothio)benzothiazolesulfenamide (MBS)

d)     tetramethylthiuram monosulfide (TMTM)

e)     benzothiazyl disulfide (MBTS)

Compound 1 was subjected to cure at 170° C for 15 minutes following which physical properties were measured and are reported in Table II.

TABLE II

| PHYSICAL PROPERTIES OF COMPOUND 1 | |
|---|---|
| Modulus (unaged) | |
| tensile (MPa/psi) | 16.1 (2330) |
| % elongation (at break) | 167 |
| Modulus (aged) 2 days @ 212°F | |
| tensile (MPa/psi) | 14.7 (2130) |
| % elongation (at break) | 122 |
| Modulus (low extension) (MPa/psi) (non normalized) | |
| 5% | 6.6 (93.0) |
| 10% | 1.2 (172.0) |
| 20% | 2.0 (289.0) |
| Durometer Shore A | |
| 23° C | 81 |
| 66° C | 79 |
| MTS Tan δ | |
| (23°C, 10Hz, 7% def) | 0.135 |
| (66°C, 10Hz, 7%def) | 0.091 |
| (100°C, 10Hz, 7%def) | 0.074 |
| (130°C, 10Hz,7%def) | 0.069 |
| Pendulum rebound | |
| 23°C | 56 |
| 100°c | 72 |
| Dynamic modulus | |
| 150°C 10Hz | 16.2 MPa (2350 psi) |

From the results reported in Table II, it is apparent that the rubber compound of the present invention provided high modulus, low hysteresis and a relatively high Shore A hardness.

As noted hereinabove, the rubber compounds of the present invention can be employed to manufacture components of pneumatic tires. With reference to the drawing figure, a tire cross-section has been presented, depicting typical components of a high profile pneumatic tire. The tire referred to generally by the numeral 1, includes a tread portion 2 terminating in a pair of tread shoulders 3 adjacent a pair of sidewalls 4, which extend radially from the axial outer shoulders 3 to a pair of bead portions indicated generally at 6. As in a typical pneumatic tire, the interior of the tire includes an innerliner 7 formed of a high air impervious material, in combination with a pair of body plies 8 and 9 which form the carcass of the tire. Body plies 8 and 9 extend around bead portion 6 and terminate in turn-up ends 10 and 11 respectively. Each bead portion 6 consists of a usual annular bead wire 13 and a bead filler of generally triangular-shaped cross-section 14. Abrasive gum strips 16 preferably are molded with the finished tire and are adapted to be located adjacent each flange of a wheel rim on which the tire is to be mounted.

Usual reinforcing belts of wire and/or fabric 12 are located between body carcass plies 8 and 9 and tread portion 2. These tire components are all contained within integrally formed inner and outer rubber casings which form the sidewalls of the tire. The tire section height is indicated at "H", and in accordance with the objects of the present invention, a height of at least 12.7 cm (5 inches) or greater is contemplated; such tires are referred to herein as high profile tires. In passenger tire nomenclature, such as P 225/60 R 16, the number 225 represents the section width of the tire in millimeters; 16 represents the tire diameter in inches, and 60 represents the ratio in percentage of the tire section height with respect to the section width, *i.e.,* the aspect ratio. Thus far, the above-referenced tire construction is illustrative of a general pneumatic tire construction which can vary.

Additionally the tire depicted in the drawing includes several new components which assist in providing a high profile, pneumatic safety tire. One of these is the sidewall insert which comprises a pair of generally crescent-shaped elastomeric reinforcing members indicated at 21 which are mounted between innerliner 7 and body plies 8 and 9 and extend from adjacent tread shoulders 3 of tread portion 2 along the sidewall of the tire to a position generally adjacent the apex 22 of bead filler 14. Another component comprises a pair of biased reinforcing strips or plies 25, which are located between sidewalls 4 and body carcass plies 8 and 9, and elastomeric reinforcing members 21, the latter extending along the sidewall of the tire to a position below apex 22 of bead filler 14. For a more detailed description of such a tire construction, particularly designed for run flat operation as a safety tire, see co-pending application, U.S. Ser. No. 07/680,714 owned by the Assignee of record herein, the subject matter of which is incorporated by reference.

The rubber compounds of the present invention have particular applicability to the sidewall inserts 21. Additionally, they can be employed in the bead filler 14. Of course, use of the compounds of the present invention is not limited solely to the manufacture of components for pneumatic tires, but these can be utilized wherever a rubber compound having high modulus, low hysteresis and relatively high Shore A hardness properties is desired, as will be apparent to those skilled in the art.

In conclusion, it should be clear from the foregoing example and specification disclosure that the compounds of the present invention have improved physical properties which can, in turn, improve the run flat performance of pneumatic tires when they are used to make components incorporated therein. It is to be understood that practice of the present invention is not limited to the natural rubber formulation containing of Compound 1 exemplified herein or by the disclosure of typical rubber polymers provided herein, and that the example has been provided merely to demonstrate practice of the subject invention. Those skilled in the art may readily select and formulate other high modulus, low hysteresis rubber compounds according to the disclosure made hereinabove.

Moreover, as noted hereinabove, the present invention should not be limited to the use of such rubber compounds as sidewall inserts for pneumatic tires or even to components of pneumatic tires per se.

## Claims

1. A sulfur-vulcanizable rubber compound having high modulus, low hysteresis and high hardness when cured, said compound characterized by comprising from 25 to 55 parts by weight polyisoprene; from 75 to 45 parts by weight of a diene polymer selected from the group consisting of polybutadiene homopolymer and mixtures thereof with up to 25 percent by weight styrene-butadiene copolymer, to total 100 parts by weight of rubber,

   wherein 60 to 80 percent by weight of said rubber is grafted with a metal salt of an $\alpha,\beta$-ethylenically unsaturated carboxylic acid;

   from 50 to 70 parts by weight reinforcing filler, per 100 parts by weight of rubber and

   at least 4 parts by weight sulfur per 100 parts by weight of rubber and, when cured, the rubber compound's mechanical modulus is from 9.7 MPa to 13.3 MPa (1400 to 4000 psi) at 15% strain, its Tan Delta is from 0.03 to 0.20, measured at 100°C, 7% deflection and 10 Hz, and its Shore A hardness is from 80 to 97 at 23°C.

2. A sulfur-vulcanizable rubber compound, as set forth in claim 1, wherein said graft polymer comprises from 20 to 40 percent by weight of said metal salt of said $\alpha,\beta$-ethylenically unsaturated carboxylic acid.

3. A sulfur-vulcanizable rubber compound, as set forth in claim 2, wherein said metal salt of said $\alpha,\beta$-ethylenically unsaturated carboxylic acid is zinc dimethacrylate.

4. A sulfur-vulcanizable rubber compound, as set forth in claim 1, wherein said reinforcing filler comprises carbon black.

5. A structural component for a pneumatic tire comprising from 25 to 55 parts by weight polyisoprene; from 75 to 45 parts by weight of a diene polymer selected from the group consisting of polybutadiene homopolymer and mixtures thereof with up to 25 percent by weight styrene-butadiene copolymer, to total 100 parts by weight of rubber,

   wherein 60 to 80 percent by weight of said rubber is grafted with a metal salt of an $\alpha,\beta$-ethylenically unsaturated carboxylic acid;

   from 50 to 70 parts by weight reinforcing filler, per 100 parts by weight of rubber and

   at least 4 parts by weight sulfur per 100 parts by weight of rubber and, when cured, the rubber compound's mechanical modulus is from 9.7 MPa to 13.3 MPa (1400 to 4000 psi) at 15% strain, its Tan Delta is from 0.03 to 0.20, measured at 100°C, 7% deflection and 10 Hz, and its Shore A hardness is from 80 to 97 at 23°C.

6. A structural component for a pneumatic tire, as set forth in claim 5, wherein said graft polymer comprises from 20 to 40 percent by weight of said metal salt of said α,β-ethylenically unsaturated carboxylic acid.

7. A structural component for a pneumatic tire, as set forth in claim 6, wherein said metal salt of said α,β-ethylenically unsaturated carboxylic acid is zinc dimethacrylate.

8. A structural component for a pneumatic tire, as set forth in claim 5, wherein said reinforcing filler comprises carbon black.

9. A structural component for a pneumatic tire, as set forth in claim 5, comprising a sidewall insert having a crescent-shaped cross-section.

10. A structural component for a pneumatic tire, as set forth in claim 5, comprising a bead filler.

11. A pneumatic tire having run flat properties imparted by at least one structural component comprising from 25 to 55 parts by weight polyisoprene; from 75 to 45 parts by weight of a diene polymer selected from the group consisting of polybutadiene homopolymer and mixtures thereof with up to 25 percent by weight styrene-butadiene copolymer, to total 100 parts by weight of rubber,

   wherein 60 to 80 percent by weight of said rubber is grafted with a metal salt of an α,β-ethylenically unsaturated carboxylic acid;

   from 50 to 70 parts by weight reinforcing filler, per 100 parts by weight of rubber and

   at least 4 parts by weight sulfur per 100 parts by weight of rubber and, when cured, the rubber compound's mechanical modulus is from 9.7 MPa to 13.3 MPa (1400 to 4000 psi) at 15% strain, its Tan Delta is from 0.03 to 0.20, measured at 100°C, 7% deflection and 10 Hz, and its Shore A hardness is from 80 to 97 at 23°C.

12. A pneumatic tire, as set forth in claim 11, wherein said graft polymer comprises from 20 to 40 percent by weight of said metal salt of an α,β-ethylenically unsaturated carboxylic acid.

13. A pneumatic tire, as set forth in claim 11, wherein said metal salt of said α,β-ethylenically unsaturated carboxylic acid is zinc dimethacrylate.

14. A pneumatic tire, as set forth in claim 11, wherein said reinforcing filler comprises carbon black.

15. A pneumatic tire, as set forth in claim 11, wherein said structural component comprises a sidewall insert having a crescent-shaped cross-section.

16. A pneumatic tire, as set forth in claim 11, wherein said structural component comprises a bead filler.


**Patentansprüche**

1. Mit Schwefel-vulkanisierbarer Kautschuk-Compound mit hohem Modul, niedriger Hysterese und hoher Härte, wenn gehärtet, wobei der Compound dadurch charakterisiert ist, daß er 25 bis 55 Gew.-Teile Polyisopren, 75 bis 45 Gew.-Teile eines Dienpolymeren, ausgewählt aus der Gruppe, bestehend aus Polybutadien, Homopolymeren und Gemischen davon, mit bis zu 25 Gew.-% eines Styrolbutadien-Copolymeren auf insgesamt 100 Gew.-Teile Kautschuk,

   wobei 60 bis 80 Gew.-% des Kautschuks mit einem Metallsalz einer α,β-ethylenisch ungesättigten Carbonsäure gepfropft sind,

   50 bis 70 Gew.-Teile Verstärkungsfüllstoff pro 100 Gew.-Teile Kautschuk und

   mindestens 4 Gew.-Teile Schwefel pro 100 Gew.-Teile Kautschuk umfaßt,

und wobei, wenn gehärtet, der mechanische Modul des Kautschuk-Compounds 9,7 MPa bis 13,3 MPa (1400 bis 4000 psi) bei einer Spannung von 15% beträgt, sein Tan Delta-Wert von 0,03 bis 0,20, gemessen bei 100°C, einer Ablenkung von 7% und 10 Hz, beträgt, und seine Shore A-Härte von 80 bis 97 bei 23°C beträgt.

2. Mit Schwefel-vulkanisierbarer Kautschuk-Compound nach Anspruch 1, dadurch **gekennzeichnet**, daß das Pfropfpolymere 20 bis 40 Gew.-% Metallsalz der $\alpha,\beta$-ethylenisch ungesättigten Carbonsäure umfaßt.

3. Mit Schwefel-vulkanisierbarer Kautschuk-Compound nach Anspruch 2, dadurch **gekennzeichnet**, daß das Metallsalz der $\alpha,\beta$-ethylenisch ungesättigten Carbonsäure Zinkdimethacrylat ist.

4. Mit Schwefel-vulkanisierbarer Kautschuk-Compound nach Anspruch 1, dadurch **gekennzeichnet,** daß der Verstärkungsfüllstoff Ruß umfaßt.

5. Strukturkomponente für Luftreifen, umfassend 25 bis 55 Gew.-% Polyisopren, 75 bis 45 Gew.-Teile eines Dienpolymeren, ausgewählt aus der Gruppe, bestehend aus Polybutadien, Homopolymeren und Gemischen davon, mit bis zu 25 Gew.-% eines Styrolbutadien-Copolymeren auf insgesamt 100 Gew.-Teile Kautschuk,

   wobei 60 bis 80 Gew.-% des Kautschuks mit einem Metallsalz einer $\alpha,\beta$-ethylenisch ungesättigten Carbonsäure gepfropft sind,

   50 bis 70 Gew.-Teile Verstärkungsfüllstoff pro 100 Gew.-Teile Kautschuk und

   mindestens 4 Gew.-Teile Schwefel pro 100 Gew.-Teile Kautschuk,

   und wobei, wenn gehärtet, der mechanische Modul des Kautschuk-Compounds 9,7 MPa bis 13,3 MPa (1400 bis 4000 psi) bei einer Spannung von 15% beträgt, sein Tan Delta-Wert von 0,03 bis 0,20, gemessen bei 100°C, einer Ablenkung von 7% und 10 Hz, beträgt, und seine Shore A-Härte von 80 bis 97 bei 23°C beträgt.

6. Strukturkomponente für Luftreifen nach Anspruch 5, dadurch **gekennzeichnet,** daß das Pfropfpolymere 20 bis 40 Gew.-% Metallsalz der $\alpha,\beta$-ethylenisch ungesättigten Carbonsäure umfaßt.

7. Strukturkomponente für Luftreifen nach Anspruch 6, dadurch **gekennzeichnet,** daß das Metallsalz der $\alpha,\beta$-ethylenisch ungesättigten Carbonsäure Zinkdimethacrylat ist.

8. Strukturkomponente für Luftreifen nach Anspruch 5, dadurch **gekennzeichnet,** daß der Verstärkungsfüllstoff Ruß umfaßt.

9. Strukturkomponente für Luftreifen nach Anspruch 5, dadurch **gekennzeichnet,** daß sie einen Seitenteileinsatz mit halbmondförmigem Querschnitt umfaßt.

10. Strukturkomponente für Luftreifen nach Anspruch 5, dadurch **gekennzeichnet**, daß sie einen Wulst-Füllstoff umfaßt.

11. Luftreifen mit flachen Laufeigenschaften, die durch mindestens eine Strukturkomponente verliehen worden sind, umfassend 25 bis 45 Gew.-Teile Polyisopren, 75 bis 45 Gew.-Teile eines Dienpolymeren, ausgewählt aus der Gruppe, bestehend aus Polybutadien, Homopolymeren und Gemischen davon, mit bis zu 25 Gew.-% eines Styrolbutadien-Copolymeren auf insgesamt 100 Gew.-Teile Kautschuk,

   wobei 60 bis 80 Gew.-% des Kautschuks mit einem Metallsalz einer $\alpha,\beta$-ethylenisch ungesättigten Carbonsäure gepfropft sind,

   50 bis 70 Gew.-Teile Verstärkungsfüllstoff pro 100 Gew.-Teile Kautschuk und

   mindestens 4 Gew.-Teile Schwefel pro 100 Gew.-Teile Kautschuk,

   und wobei, wenn gehärtet, der mechanische Modul des Kautschuk-Compounds 9,7 MPa bis 13,3 MPa (1400 bis 4000 psi) bei einer Spannung von 15% beträgt, sein Tan Delta-Wert von 0,03 bis 0,20, gemessen bei 100°C, einer Ablenkung von 7% und 10 Hz, beträgt, und seine Shore A-Härte von 80 bis 97 bei 23°C beträgt.

**12.** Luftreifen nach Anspruch 11, dadurch **gekennzeichnet,** daß das Pfropfpolymere 20 bis 40 Gew.-% Metallsalz der α,β-ethylenisch ungesättigten Carbonsäure umfaßt.

**13.** Luftreifen nach Anspruch 11, dadurch **gekennzeichnet,** daß das Metallsalz der α,β-ethylenisch ungesättigten Carbonsäure Zinkdimethacrylat ist.

**14.** Luftreifen nach Anspruch 11, dadurch **gekennzeichnet,** daß der Verstärkungsfüllstoff Ruß umfaßt.

**15.** Luftreifen nach Anspruch 11, dadurch **gekennzeichnet,** daß er einen Seitenteileinsatz mit halbmondförmigem Querschnitt umfaßt.

**16.** Luftreifen nach Anspruch 11, dadurch **gekennzeichnet,** daß er einen Wulst-Füllstoff umfaßt.

## Revendications

**1.** Composition de caoutchouc vulcanisable par le soufre, ayant un haut module, une faible hystérésis et une grande dureté à l'état durci, ladite composition étant caractérisée en ce qu'elle comprend 25 à 55 parties en poids de polyisoprène ; 75 à 45 parties en poids d'un polymère diénique choisi dans le groupe consistant en un homopolymère de polybutadiène et ses mélanges avec jusqu'à 25 % en poids d'un copolymère styrène-butadiène, pour un total de 100 parties en poids de caoutchouc,

dans lequel 60 à 80 pour cent en poids de ce caoutchouc sont greffés avec un sel métallique d'un acide carboxylique à insaturation α,β-éthylénique ;
50 à 70 parties en poids d'une charge de renforcement, pour 100 parties en poids de caoutchouc et au moins 4 parties en poids de soufre pour 100 parties en poids de caoutchouc, et ladite composition de caoutchouc, à l'état durci, ayant un module mécanique de 9,7 Mpa à 13,3 Mpa (1400 à 4000 psi) à une déformation de 15 %, une valeur de Tan Dela de 0,03 à 0,20, mesurée à 100°C, une déflexion de 7% et à 10 Hz, et une dureté Shore A de 80 à 97 à une température de 23°C.

**2.** Composition de caoutchouc vulcanisable par le soufre répondant à la définition suivant la revendication 1, dans laquelle le polymère greffé comprend 20 à 40 pour cent en poids du sel métallique de l'acide carboxylique à insaturation α,β-éthylénique.

**3.** Composition de caoutchouc vulcanisable par le soufre répondant à la définition suivant la revendication 2, dans laquelle le sel métallique de l'acide carboxylique à insaturation α,β-éthylénique est le diméthacrylate de zinc.

**4.** Composition de caoutchouc vulcanisable par le soufre répondant à la définition suivant la revendication 1, dans laquelle la charge de renforcement comprend du noir de carbone.

**5.** Composant structural pour bandage pneumatique, comprenant 25 à 55 parties en poids de polyisoprène ; 75 à 45 parties en poids d'un polymère diénique choisi dans le groupe consistant en un homopolymère de polybutadiène et ses mélanges avec jusqu'à 25 pour cent en poids d'un copolymère styrène-butadiène, pour un total de 100 parties en poids de caoutchouc,

dans lequel 60 à 80 pour cent en poids de ce caoutchouc sont greffés avec un sel métallique d'un acide carboxylique à insaturation α,β-éthylénique,
50 à 70 parties en poids d'une charge de renforcement, pour 100 parties en poids de caoutchouc, et au moins 4 parties en poids de soufre pour 100 parties en poids de caoutchouc,
ladite composition de caoutchouc, à l'état durci, ayant un module mécanique de 9,7 MPa à 13,3 MPa (1400 à 4000 psi) à une déformation de 15 %, une valeur de Tan Delta de 0,03 à 0,20, mesurée à 100°C, à une déflexion de 7 % et à 10 Hz, et une dureté Shore A de 80 à 97 à 23°C.

**6.** Composant structural pour bandage pneumatique, répondant à la définition suivant la revendication 5, dans lequel le polymère greffé comprend 20 à 40 % en poids du sel métallique de l'acide carboxylique à insaturation α,β-éthylénique.

**7.** Composant structural pour bandage pneumatique, répondant à la définition suivant la revendication 6, dans lequel le sel métallique de l'acide carboxylique à insaturation α,β-éthylénique est le diméthacrylate de zinc.

8. Composant structural pour bandage pneumatique, répondant à la définition suivant la revendication 5, dans lequel la charge de renforcement comprend le noir de carbone.

9. Composant structural pour bandage pneumatique, répondant à la définition suivant la revendication 5, comportant un insert de flanc ayant une section transversale en forme de croissant.

10. Composant structural pour bandage pneumatique, répondant à la définition suivant la revendication 5, comprenant une bandelette support talon.

11. Bandage pneumatique ayant des propriétés d'aptitude à rouler à plat conférées par au moins un composant structural comprenant 25 à 55 parties en poids de polyisoprène, 75 à 45 parties en poids d'un polymère diénique choisi dans le groupe consistant en un homopolymère de polybutadiène et ses mélanges avec jusqu'à 25 pour cent en poids d'un copolymère styrène-butadiène, pour un total de 100 pour cent en poids de caoutchouc,

dans lequel 60 à 80 pour cent en poids de ce caoutchouc sont greffés avec un sel métallique d'un acide carboxylique à insaturation α,β-éthylénique ;
50 à 70 parties en poids d'une charge de renforcement, pour 100 parties en poids de caoutchouc, et
au moins 4 parties en poids de soufre pour 100 parties en poids de caoutchouc,
ladite composition de caoutchouc, à l'état durci ayant un module mécanique de 9,7 MPa à 13,3 MPa (1400 à 4000 psi) à une déformation de 15 %, une valeur de Tan Delta de 0,03 à 0,20, mesurée à 100°C, à une déflexion de 7 % et à 10 Hz, et une dureté Shore A de 80 à 97 à 23°C.

12. Bandage pneumatique, répondant à la définition suivant la revendication 11, dans lequel le polymère greffé comprend 20 à 40 pour cent en poids du sel métallique d'un acide carboxylique à insaturation α,β-éthylénique.

13. Bandage pneumatique, répondant à la définition suivant la revendication 11, dans lequel le sel métallique de l'acide carboxylique à insaturation α,β-éthylénique est le diméthacrylate de zinc.

14. Bandage pneumatique répondant à la définition suivant la revendication 11, dans lequel la charge de renforcement comprend le noir de carbone.

15. Bandage pneumatique répondant à la définition suivant la revendication 11, dans lequel le composant structural comprend un insert de flanc ayant une section transversale en forme de croissant.

16. Bandage pneumatique répondant à la définition suivant la revendication 11, dans lequel le composant structural comprend une bandelette support talon.